## Europäisches Patentamt

## European Patent Office

## Office européen des brevets

(19)

(11) Veröffentlichungsnummer: **0 075 301**
**B1**

(12)

# EUROPÄISCHE PATENTSCHRIFT

(45) Veröffentlichungstag der Patentschrift:
10.07.85

(21) Anmeldenummer: 82108631.1

(22) Anmeldetag: 18.09.82

(51) Int. Cl.⁴: **G 11 B 3/58,** G 11 B 23/50,
H 05 F 1/00

(54) Schutzhülle für einen scheibenförmigen Ton- und/oder Videosignalaufzeichnungsträger mit antistatischer Wirkung.

(30) Priorität: 23.09.81 DE 3137788

(43) Veröffentlichungstag der Anmeldung:
30.03.83 Patentblatt 83/13

(45) Bekanntmachung des Hinweises auf die Patenterteilung:
10.07.85 Patentblatt 85/28

(84) Benannte Vertragsstaaten:
BE FR GB IT NL SE

(56) Entgegenhaltungen:
BE - A - 534 310
DE - A - 2 856 271
DE - B - 1 291 531
FR - A - 1 108 391
FR - A - 2 009 769
FR - A - 2 336 765
GB - A - 2 023 096

PATENTS ABSTRACTS OF JAPAN, Band 1, Nr. 135, 9. November 1977, Seite 6348E77

(73) Patentinhaber: Urdahl, Peter H., Leuchtturmweg 36, D-2000 Hamburg 56 (DE)

(72) Erfinder: Urdahl, Peter H., Leuchtturmweg 36, D-2000 Hamburg 56 (DE)

(74) Vertreter: Schulmeyer, Karl-Heinz, Dr., Kieler Strasse 59a, D-2087 Hasloh (DE)

## Beschreibung

Vorliegende Erfindung betrifft eine Schutzhülle für einen scheibenförmigen Ton- und/oder Videosignalaufzeichnungsträger mit antistatischer Wirkung.

Ton- und Videosignalaufzeichnungsträger sind in der Regel aus hochpolymerem Material, das sich bekanntlich leicht elektrostatisch auflädt. Infolge dieser elektrostatischen Aufladung werden entgegengesetzt geladene Staubpartikel, die in die Nähe dieser Aufzeichnungsträger kommen, angezogen, wodurch die Oberfläche solcher Aufzeichnungsträger verhältnismäßig rasch verstaubt mit der Folge, daß beim Abspielen dieser Aufzeichnungsträger die Wiedergabe der Aufzeichnung sowohl durch die Staubteilchen als auch zusätzlich durch die in Form von Funkenbildungen auftretenden elektrostatischen Entladungen empfindlich gestört wird.

Da diese Störungen die Wiedergabequalität von Ton- und/oder Videosignalaufzeichnungsträgern erheblich beeinträchtigen können, besteht ein dringender Bedarf an einer Beseitigung dieser Störungen. Es sind daher bereits eine Reihe von Maßnahmen bekanntgeworden, mit deren Hilfe die Bildung elektrostatischer Ladungen auf den Ton- bzw. Videosignalaufzeichnungsträgern verhindert werden soll.

Beispielsweise kann dies durch das Aufbringen eines antistatischen Belags auf die Oberfläche solcher Ton- bzw. Videosignalaufzeichnungsträger bewirkt werden. Dieser Belag hat jedoch den Nachteil, daß er nur kurze Zeit wirksam ist und beim Gebrauch durch die unvermeidbaren mechanischen Einwirkungen, z. B. durch das betreffende Abnahmesystem, durch die Handhabung beim Einschieben der Träger in die Aufbewahrungshüllen oder beim Abwischen der Träger beispielsweise mit einem Tuch zwecks Reinigung von Staubpartikeln, verschwindet. Gleichzeitig besteht die Gefahr, daß durch solche aufgebrachten Beläge die Wiedergabequalität beim Abspielen solcher Aufzeichnungsträger mehr oder weniger stark beeinträchtigt wird.

Ferner hat man versucht, das Problem dadurch zu lösen, daß man antistatisch wirkende Mittel in die Grundmasse eingearbeitet hat, aus der die Ton- oder Videosignalaufzeichnungsträger hergestellt werden. Die antistatische Wirkung der auf diese Weise ausgerüsteten Aufzeichnungsträger ist jedoch ebenfalls nicht zufriedenstellend, da die Wirkung bereits nach kurzer Zeit erheblich nachläßt, so daß die oben geschilderten nachteiligen Wirkungen der elektrostatischen Aufladung nach verhältnismäßig kurzer Zeit wieder auftreten.

Auch die seit einiger Zeit im Handel befindlichen, mit Antistatika imprägnierten Wischtücher haben zu keiner befriedigenden Lösung des in Rede stehenden Problems geführt. Mit solchen Wischtüchern wird nämlich der auf den Oberflächen der Träger befindliche Staub abgewischt und gleichzeitig eine mehr oder weniger dünne Schicht des antistatischen Mittels auf die Trägeroberfläche aufgetragen. Die antistatische Wirkung einer solchen Schicht ist jedoch ebenso wie die eines auf die Trägeroberflächen aufgesprühten antistatischen Belags nur von sehr begrenzter Dauer. Solcher Maßnahmen müssen daher häufiger wiederholt werden, sind daher unbequem und unterliegen der Gefahr, daß man sie vergißt. Die benutzten Wischtücher verlieren nach relativ kurzer Zeit bereits ihre antistatische Wirksamkeit, was häufig vom Benutzer nicht oder zu spät bemerkt wird, so daß eine Ersetzung durch neue, antistatisch wirksame Tücher zu spät erfolgt oder ganz unterbleibt. Aber auch das wiederholte Auftragen eines solchen antistatischen Belags führt infolge der Bildung von bleibenden Rückständen auf der Oberfläche des Trägers leicht zu einer deutlichen Beeinträchtigung der Wiedergabequalität, so daß auch diese Lösung des Problems nicht zufriedenstellend ist.

Aus der DE-OS 2 856 271 ist bekannt, daß man das Problem der Vermeidung elektrostatischer Aufladungen dadurch lösen kann, daß man den Ton- und/oder Videosignalaufzeichnungsträger während seiner Aufbewahrung bzw. wenigstens vor seiner Benutzung zwischen zwei Folien aus Hochdruckpolyethylen oder Polypropylen legt, in die ein Antistatikum eingearbeitet ist, welches in einer zum Antistatischmaschen des Ton- bzw. Videosignalaufzeichnungsträgers ausreichenden Menge an die Oberfläche der Folie zu wandern vermag.

Die Folien werden mit der Oberfläche des Ton- bzw. Videosignalaufzeichnungsträgers in innige Berührung gebracht, wodurch das Antistatikum in einer geringen, zum Antistatischmachen ausreichenden Menge auf die Oberfläche des Aufzeichnungsträgers übertragen wird.

Dieses bekannte Verfahren ist sehr einfach durchzuführen, denn es genügt, wenn die das Antistatikum übertragenden Folien kurzfristig mit der Oberfläche des Ton- bzw. Videosignalaufzeichnungsträgers in inniger Berührung stehen, wobei dieser Vorgang praktisch beliebig oft wiederholt werden kann, ohne daß ein Nachlassen der antistatischen Wirksamkeit der übertragenden Folien beobachtet wird. Die Folienoberfläche kann auf diese Weise jahrelang die Aufzeichnungsträger mit der erforderlichen Menge an übertragbarem Antistatikum versorgen.

Zur Durchführung dieses bekannten Verfahrens wird in der genannten DE-OS eine Hülle beschrieben, in die der scheibenförmige Ton- und/oder Videosignalaufzeichnungsträger eingeschoben werden kann. Bei dieser bekannten Hülle besteht wenigstens die mit der Trägeroberfläche in Berührung stehende Innenfläche der Hülle aus Hochdruckpolyethylen- oder Polypropylenfolie mit einem eingearbeiteten geeigneten Antistatikum, das in einer zum Antistatischmachen des Ton- und/oder Videosignalaufzeichnungsträgers ausreichenden Menge an die Oberfläche der Folie austritt.

Diese bekannten Hüllen aus Hochdruckpolyethylen- oder Polypropylenfolie haben sich zwar bezüglich des Antistatischmachens der mit ihnen in Berührung stehenden Aufzeichnungsträger gut bewährt. Es hat sich jedoch gezeigt, daß die relativ dünnwandigen, elastischen Folienhüllen nicht widerstandsfähig genug sind, um das wiederholte Hineinstecken und Herausziehen der scheibenförmigen Aufzeichnungsträger unbeschädigt zu überstehen. Zumindest läßt es sich nicht immer vermeiden, daß die Folienhüllen übermäßig gedehnt oder gezerrt werden, so daß sie nicht mehr in dem erforderlichen Maße dicht an den scheibenförmigen Aufzeichnungsträgern anliegen, insbesondere wenn diese in senkrechter Stellung gelagert werden.

Man hat aus diesem Grunde die antistatisch wirkende Hochdruckpolyethylen- oder Polypropylenfolienumhüllung mit einer daran angepaßten Außenhülle aus Papierfolie versehen, die die bei Schallplattenhüllen übliche kreisrunde Aussparung in der Mitte der Hüllenseiten aufweist. Diese äußere Papierhülle ist der inneren Kunststoffolienhülle möglichst genau angepaßt, so daß die Seiten der Kunststoffhülle glatt und ohne Falten an den Innenseiten der Papierhülle anliegen. Da die Papierhülle eine wesentliche größere Steifigkeit als die Kunststoffhülle besitzt, wirkt sie gleichzeitig stützend auf die Kunststoffhülle. Dadurch wird das Hineinstecken und Herausziehen der scheibenförmigen Aufzeichnungsträger erleichtert, und es kommt kaum mehr zu lästigen Behinderungen durch übermäßiges Ausdehnen oder Zerren der inneren Kunststoffhülle, die zu deren dauernden Verformung führen kann. Durch die genau angepaßte äußere Papierhülle wird die innere Kunststoffhülle vielmehr in ihrer gewünschten Lage festgehalten, so daß sie sich gleichmäßig dicht an die scheibenförmigen Aufzeichnungsträger anlegen kann, auch wenn diese in senkrechter Position aufbewahrt werden.

Mit der Anwendung einer äußeren, angepaßten Papierhülle wird zweifellos eine bessere Handhabbarkeit der Hülle für die Aufzeichnungsträger erreicht. Es hat sich jedoch gezeigt, daß die aus einer antistatisch ausgerüsteten inneren Folienhülle und einer daran dicht anliegenden stützenden äußeren Papierhülle bestehende Tasche eine deutlich geringere antistatische Wirkung auf die Aufzeichnungsträger zeigt, als wenn die antistatisch ausgerüstete Folienhülle gemäß DE-OS 2 856 271 allein, d. h. also ohne die Papierhülle, angewendet wird.

Aufgabe der vorliegenden Erfindung ist es daher, eine Schutzhülle für einen scheibenförmigen Ton- und/oder Videosignalaufzeichnungsträger zu schaffen, die nicht die vorgenannten Nachteile aufweist, sondern deren gute antistatische Wirkung auf den Aufzeichnungsträger bei im Vergleich zur bisherigen Folienhülle verbesserter Handhabbarkeit im wesentlichen erhalten bleibt. Insbesondere soll eine Schutzhülle geschaffen werden, die in einer für den Benutzer einfachen und bequemen Weise eine dauerhafte antistatische Ausrüstung der Ton- und/oder Videosignalaufzeichnungsträger gewährleistet.

Diese Aufgabe wird erfindungsgemäß gelöst durch eine Schutzhülle für einen scheibenförmigen Ton- und/oder Videosignalaufzeichnungsträger mit einem dem Aufzeichnungsträger zugewandten, auf der Oberfläche des Aufzeichnungsträgers dicht und gleichmäßig anliegenden, elektrisch leitenden Innenteil aus Hochdruckpolyethylen- oder Polypropylenfolie mit eingearbeitetem Antistatikum, das in einer ausreichenden Menge an die Folienoberfläche austritt, und einem Außenteil aus einer den Innenteil umgebenden Papierfolie. Die Erfindung ist dadurch gekennzeichnet, daß zwischen Innen- und Außenteil eine Zwischenschicht vorgesehen ist, die aus einem den Übergang des Antistatikums aus der Hochdruckpolyethylen- oder Polypropylenfolie in die Papierfolie im wesentlichen verhindernden Material besteht.

Der Erfindung liegt die überraschende Feststellung zugrunde, daß die nachteilige Wirkung der äußeren Papierhülle auf die antistatische Wirksamkeit der inneren Hülle aus Hochdruckpolyethylen- bzw. Polypropylenfolie, in die ein auswanderungsfähiges Antistatikum in geeigneter Menge eingearbeitet ist, dadurch beseitigt werden kann, daß man zwischen Papierhülle und Kunststoffolie eine Zwischenschicht vorsieht, die aus einem Material besteht, dessen Permeabilität für das Antistatikum außerordentlich gering ist. Es wurde nämlich gefunden, daß die antistatische Wirkung der Hochdruckpolyethylen- bzw. Polypropylenfolie nur dort deutlich nachläßt, wo sie mit der Papierhülle unmittelbar in Berührung steht. Anhand von Messungen des Oberflächenwiderstandes mit einem geeigneten Widerstandsmeßgerät, z. B. dem Eltex-Feldmeßgerät, wurde festgestellt, daß der von Papier abgedeckte Teil der antistatisch ausgerüsteten Hochdruckpolyethylen- bzw. Polypropylenfolie innerhalb relativ kurzer Zeit, nämlich innerhalb weniger Tage, seine antistatische Wirksamkeit praktisch vollständig verliert, während der in der kreisrunden Aussparung der Papierhülle freiliegende Teil der Hochdruckpolyethylen- bzw. Polypropylenfolie seine antistatische Wirksamkeit in der gleichen Zeit praktisch unverändert behielt.

Aufgrund dieser Beobachtung wird angenommen, daß das Nachlassen der antistatischen Wirkung auf einem »Absaugeffekt« beruht, bei dem das Papier das Antistatikum aus der Hochdruckpolyethylen- bzw. Polypropylenfolien zu einem wesentlichen Teil aufnimmt. Offenschichtlich besitzt das Papier der Außenhülle eine große Permeabilität in bezug auf das auswanderungsfähige antistatische Mittel. Durch die erfindungsgemäß vorgesehene Zwischenschicht aus einem Material mit geringer Durchlässigkeit für das betreffende antistatische Mittel, die zwischen antistatisch ausgerüstetem Innenteil und aus Papier bestehendem Außenteil der Schutzhülle angeordnet ist, wird ein Auswandern oder »Absaugen« des antistatischen Mittels aus der Hochdruckpolyethylen- bzw. Polypropylenfolie in die Papierhülle so weit unterbunden, daß die antistatische Wirkung der Schutzhülle auf den in ihr aufbewahrten scheibenförmigen Aufzeichnungsträger auch über eine längere Zeit, z. B. viele Monate oder einige

3

Jahre, im wesentlichen erhalten bleibt.

Als Material für die Zwischenschicht mit einer wirksamen Sperrwirkung gegen das Auswandern des in die Hochdruckpolyethylen- bzw. Polypropylenfolie eingearbeiteten antistatischen Mittels in die Papierhülle sind allgemein solche Materialien geeignet, die eine möglichst geringe Permeabilität für das betreffende antistatische Mittel besitzen. Gemäß einer bevorzugten Ausführungsart der Erfindung besteht die Zwischenschicht aus Polyvinylidenchlorid, Polyvinylidenfluorid oder einem Ionomeren, z. B. einem ionomeren Polyethylen, wie beispielsweise handelsüblichen Ethylen-Acrylsäure-Copolymeren (z. B. Surlyn A [eingetr. Warenzeichen]). Diese Materialien zeichnen sich bekanntlich durch eine gute Haftung auf anderen Materialien, wie Papier, und durch geringe Permeabilität für Fette und Öle aus.

Dementsprechend ist gemäß einer weiteren bevorzugten Ausführungsart der Schutzhülle vorgesehen, daß die Zwischenschicht mit der Papierfolie und/oder mit der Hochdruckpolyethylen- oder Polypropylenfolie einen festen Verbund bildet. Besonders bevorzugt ist ein auf einer Seite mit Polyvinylidenchlorid oder Polyvinylidenfluorid oder einem Ionomeren beschichtetes Papier, das gleichzeitig den Außenteil und die Zwischenschicht der erfindungsgemäßen Schutzhülle bildet und daher eine besonders einfache und wirtschaftliche Herstellung dieser Schutzhülle ermöglicht.

Die gleiche Wirkung als Sperrschicht gegenüber dem antistatischen Mittel wird aber auch erzielt, wenn die Materialien mit geringer Permeabilität für Antistatika wie Polyvinylidenchlorid und Polyvinylidenfluorid oder ein geeignetes Ionomeres als Schicht direkt mit den mit dem Antistatikum ausgerüsteten Hochdruckpolyethylen- bzw. Polypropylenfolien verbunden sind. Dies kann durch einfaches Beschichten oder Auftragen einer das Material enthaltenden Lösung oder Aufschlämmung auf die Hochdruckpolyethylen- oder Polypropylenfolie erfolgen oder auch durch Coextrusion dieser Folien zusammen mit einem Material mit geringer Permeabilität für die in Frage kommenden antistatischen Mittel. Diese Herstellungsweisen sind dem Fachmann bekannt und brauchen daher nicht näher beschrieben zu werden.

Die Schichtdicke der Zwischenschicht soll so bemessen sein, daß die Sperrfunktion gegenüber dem antistatischen Mittel in zufriedenstellender Weise erfüllt werden kann. Aus wirtschaftlichen Gründen wird die Zwischenschicht allerdings möglichst dünn gewählt werden. Praktische Versuche haben ergeben, daß eine Schichtdicke der Zwischenschicht von 15 bis 50 µm im allgemeinen den gewünschten Zweck voll erfüllt und daher bevorzugt wird. In jedem Falle muß die Zwischenschicht gleichförmig und ohne Unterbrechung zwischen der antistatisch ausgerüsteten Folie und der Papierfolie angeordnet sein, damit sie ihre Aufgabe zufriedenstellend erfüllen kann.

Der Innenteil der erfindungsgemäßen Schutzhülle besteht aus Hochdruckpolyethylen- oder Polypropylenfolie, in die jedes an sich bekannte antistatische Mittel eingearbeitet sein kann, das die folgenden Voraussetzungen erfüllt:

1. Die antistatischen Eigenschaften sollen beim Einarbeiten in den Kunststoff vollständig oder wenigstens weitgehend erhalten bleiben.
2. Durch die Einarbeitung dürfen die für den beabsichtigten Zweck relevanten Eigenschaften des jeweiligen Hochpolymeren, wie Elastizität, Transparenz oder makellose Oberfläche, nicht oder nur unwesentlich beeinträchtigt werden, d. h. das Antistatikum muß mit dem jeweiligen Hochpolymeren verträglich sein.
3. Das Antistatikum muß in einer bestimmten Zeit in genügendem Maße durch die Folie an deren Oberfläche wandern können, damit jederzeit eine ausreichende Menge an Antistatikum auf der Oberfläche der Folie für eine Übertragung auf die Ton- oder Videosignalaufzeichnungsträgeroberfläche bereitsteht.

Die in der DE-OS 1 927 677 beschriebenen antistatisch wirkenden Produkte erfüllen die genannten Voraussetzungen in hohem Maße und sind daher besonders gut geeignet zur Einarbeitung in die Hochdruckpolyethylen- oder Polypropylenfolie des Innenteils der erfindungsgemäßen Schutzhülle. Es handelt sich bei diesen antistatischen Produkten um Fettsäureglyceride mit wenigstens 50 Gew.-% gesättigten linearen $C_6$- bis $C_{12}$-Fettsäuremonoglyceriden. Erfindungsgemäße Schutzhüllen mit Hochdruckpolyethylen- oder Polypropylenfolien als Innenteil, die diese genannten antistatischen Mittel eingearbeitet enthalten, werden besonders bevorzugt.

Mit der erfindungsgemäßen Schutzhülle ist es nunmehr möglich, Ton- und/oder Videosignalaufzeichnungsträger in Platten- oder Scheibenform, die in einer solchen Schutzhülle aufbewahrt werden, nicht nur vor Staub und äußeren mechanischen Einwirkungen zu schützen, sondern sie während der Aufbewahrungszeit in der Schutzhülle auch in zufriedenstellendem Maße antistatisch zu machen, so daß die Aufzeichnungsträger bei Entnahme aus der Schutzhülle ohne eine zusätzliche säubernde und antistatisch machende Behandlung, wie dies bei der Aufbewahrung von Aufzeichnungsträgern in den bekannten Papierschutzhüllen erforderlich ist, sofort vollkommen frei von Störungen durch elektrostatische Aufladungen abgespielt werden können. Dabei wird die Wiedergabequalität durch die auf der Oberfläche der Aufzeichnungsträger befindlichen antistatischen Mittel auch bei hohen Ansprüchen an die Wiedergabequalität in keiner merkbaren Weise beeinträchtigt. Außerdem lassen sich die scheibenförmigen Aufzeichnungsträger leicht in die erfindungsgemäße Schutzhülle hineinstecken und ebenso leicht aus ihnen herausnehmen, ohne daß hierbei bei sachgemäßen Gebrauch die innere, antistatisch ausgerüstete Folienhülle übermäßig gedehnt oder gezerrt oder unter Faltenbildung ineinandergeschoben wird, was für den während es Aufbewahrens des Aufzeichnungsträgers in der Schutzhülle stattfindenden Vorgang des Antistatischmachens des Aufzeichnungsträgers abträglich wäre. Da das in die Folien eingearbeitete Antistatikum erst nach und nach über einen längeren Zeitraum an die Folienoberfläche wandert, wobei die erfindungsgemäß vorgesehene Zwischenschicht der Schutzhülle dafür sorgt, daß das eingearbeitete Antistatikum nur in Richtung auf die der Oberfläche des Aufzeichnungsträgers zugewandten Seite der Hochdruckpolyethylen- bzw. Polypropylenfolien wandert und austritt, ist gewährleistet, daß auch bei dem erfindungsgemäßen Aufbau der Schutzhülle mit einer den antistatisch ausgerüsteten Innenteil umgebenden äußeren Papiertasche die antistatische Wirkung des Innenteils der Schutzhülle über lange Zeit hinweg erhalten bleibt, so daß sich auf der Folienoberfläche stets eine ausreichende Menge an übertragbarem Antistatikum befindet und die Folie über Jahre hinweg praktisch beliebig oft wiederholbar den in die Hülle eingeschobenen Aufzeichnungsträger an seiner Oberfläche mit einer sehr dünnen Schicht des Antistatikums versorgen kann.

Die einzuarbeitenden Mengen an antistatischen Mitteln hängen naturgemäß von den Eigenschaften des eingesetzten Kunststoffes und es verwendeten Antistatikums ab. Die geeigneten Mengen lassen sich aber vom Fachmann leicht durch orientierende Versuche feststellen. Im allgemeinen liegen diese Mengen, bezogen auf die Gesamtmenge des Hochdruckpolyethylens bzw. des Polypropylens, bei etwa 0,02 bis 5 Gew.-% des antistatisch wirkenden Mittels.

Die nachfolgenden Beispiele dienen der weiteren Erläuterung der Erfindung.

## Beispiel 1 (Vergleichsbeispiel)

Es wurde der Oberflächenwiderstand von Schallplattentaschen untersucht, die aus einer inneren Hülle aus Hochdruckpolyethylenfolie mit ca. 0,1 Gew.-% $C_6$- bis $C_{12}$-Fettsäuremonoglyceriden als antistatischem Mittel und einer direkt darauf aufliegenden äußeren unbeschichteten Papierhülle mit einer zentralen kreisförmigen Aussparung von ca. 9 cm Durchmesser bestanden. Ein Teil der Hüllen aus Hochdruckpolyethylenfolie hatte eine Dicke von 30 μm, ein anderer Teil eine Dicke von 100 μm.

Die Messung des Oberflächenwiderstandes erfolgte gemäß DIN 53 482 nach der Brückenmethode mit einem Widerstandsmeßgerät bei einer Meßspannung von 1000 V, einer Elektrodenlänge von 10 cm und einem Elektrodenabstand von 1 cm, wobei 60 Sekunden nach Anlegen der Spannung der Widerstand gemessen wurde. Es wurde jeweils von 5 verschiedenen Messungen des Oberflächenwiderstandes (R in Ω) der Mittelwert gebildet.

Der Oberflächenwiderstand wurde jeweils an einer Stelle, wo die Folie in direkter Berührung mit der unbeschichteten Papierfolie stand, und an einer zweiten Stelle, wo infolge der Aussparung in der Papierfolie die Hochdruckpolyethylenfolie keinen Kontakt mit der Papierfolie hatte, gemessen.

Die Ergebnisse sind in der folgenden Tabelle I zusammengestellt.

5

Tabelle I

Oberflächenwiderstand R (in $\Omega$) von Hochdruckpolyethylenfolien mit 0,1 Gew.-% $C_6-C_{12}$-Fettsäure-monoglyceriden als Antistatikum;
(a) = in Kontakt mit unbeschichtetem Papier, (b) = ohne Papier

| Nach Zeitraum (Tagen) | Foliendicke 100 µm | | Foliendicke 30 µm | |
|---|---|---|---|---|
| | a) mit Papier log R | b) ohne Papier log R | a) mit Papier log R | b) ohne Papier log R |
| zu Beginn des Versuches | 8,9 | 8,9 | 9,9 | 9,8 |
| 1 | 9,7 | 9,0 | 10,2 | 9,8 |
| 2 | 10,2 | 9,1 | 11,4 | 9,6 |
| 3 | 10,5 | 9,0 | 12,5 | 9,9 |
| 4 | 10,5 | 9,2 | 13,1 | 9,8 |
| 5 | 10,9 | 9,1 | 13,8 | 10,1 |
| 6 | 11,5 | 9,3 | 14,3 | 9,8 |
| 7 | 12,2 | 9,3 | | |
| 8 | 13,0 | 9,2 | | |
| 9 | 13,1 | 9,4 | | |
| 10 | 13,2 | 9,2 | | |
| 11 | 14,5 | 9,2 | | |

Die vorstehenden Versuchsergebnisse zeigen sehr deutlich den Verlust an antistatischer Wirkung, der bei den Folien eintritt, die in direkter Berührung mit der unbeschichteten Papierfolie stehen. Dabei hatte die Folie mit der dünneren Schichtdicke (30 µm) bereits nach 6 Tagen ihre antistatische Wirkung vollständig verloren, wogegen die 100 µm dicke Folie erst nach etwa der doppelten Zeit völlig wirkungslos war. Dagegen blieb bei den Folien, die nicht mit der Papierfolie in Berührung standen, die antistatische Wirksamkeit über den gemessenen Zeitraum praktisch vollständig erhalten.

## Beispiel 2

Es wurden Messungen des Oberflächenwiderstandes (R in $\Omega$) wie in Beispiel 1 durchgeführt an Hochdruckpolyethylenfolien mit 0,1 Gew.-% $C_6$- bis $C_{12}$-Fettsäuremonoglyceriden als Antistatikum. Diese Folien wurden zwischen mit Polyvinylidenchlorid (PVDC) beschichtete Papierfolien gelegt, wobei die beschichteten Seiten der Papierfolien mit der jeweiligen Polyethylenfolie in Kontakt standen. Die Dicke der Polyethylenfolie betrug 30 µm.
Die Ergebnisse dieser Untersuchungen sind der Tabelle II zu entnehmen.

6

Tabelle II

Oberflächenwiderstand R (in $\Omega$) von Hochdruckpolyethylenfolien mit 0,1 Gew.-% $C_6$—$C_{12}$-Fettsäuremonoglyceriden als Antistatikum, gemessen an Folien, die zwischen mit Polyvinylidenchlorid beschichtete Papierfolien gelegt worden waren, wobei die beschichteten Seiten der Papierfolien mit der PE-Folie in Kontakt standen. Dicke der PE-Folie: 30 µm.

| Nach Zeitraum (Tagen) | Papier mit PVDC-Beschichtung von 30 g/m² Oberflächenwiderstand der PE-Folie log R | 20 g/m² log R |
|---|---|---|
| zu Beginn des Versuchs | 9,8 | 9,8 |
| 4 | 9,7 | 9,0 |
| 8 | 8,9 | 8,8 |
| 15 | 9,2 | 9,1 |
| 22 | 9,0 | 9,0 |

Aus Tabelle II geht hervor, daß durch die Einführung der Polyvinylidenchlorid-Zwischenschicht ein unerwünschter Abfall der antistatischen Wirkung der Hochdruckpolyethylenfolie vollständig vermieden wird, und zwar sowohl bei einer Beschichtung von 30 g/m² als auch mit 20 g/m² PVDC. Es ist sehr deutlich zu erkennen, daß die antistatische Wirkung während des Versuchszeitraums (22 Tage) sogar noch deutlich ansteigt, da bei dieser Versuchsanordnung die an die Oberfläche der Polyethylenfolie gewanderte Menge an Antistatikum nicht zwischenzeitlich, z. B. durch Übertragung auf die Oberfläche eines Aufzeichnungsträgers, abgeführt werden konnte.

### Beispiel 3

Es wurden Messungen des Oberflächenwiderstandes R (in $\Omega$) wie in Beispiel 1 an Schallplattentaschen durchgeführt, die den Aufbau der erfindungsgemäßen Schutzhülle aufwiesen, sowie an den Oberflächen von in solchen Schallplattentaschen aufbewahrten PVC-Schallplatten.

Der Innenteil einer solchen Schallplattentasche bestand aus einer 30 µm dicken Hochdruckpolyetylenfolie, die 0,1 Gew.-% $C_6$- bis $C_{12}$-Fettsäuremonoglyceride eingearbeitet enthielt, der Außenteil aus einer den Innenteil dicht umgebenden Papierfolie, die auf der dem Innenteil zugewandten Seite als Zwischenschicht eine Polyvinylidenchloridbeschichtung von 20 g/m² aufwies. Die Ergebnisse der Messungen sind nachfolgend zusammengestellt:

|  | log R |
|---|---|
| Zu Beginn des Versuchs: | |
| PVC-Schallplatte, unbehandelt | 14 |
| Hochdruckpolyethylenfolie, antistatisch ausgerüstet, wie oben angegeben | 9,8 |
| nach 9 Tagen: | |
| PVC-Schallplatte, obere Seite | 12,5 |
| PVC-Schallplatte, untere Seite | 12,8 |
| Hochdruckpolyethylenfolie, wie oben | 9,8 |
| nach 2 Monaten: | |
| PVC-Schallplatte, obere Seite | 11,8 |
| PVC-Schallplatte, untere Seite | 12,0 |
| Hochdruckpolyethylenfolie, wie oben | 10,3 |

Die Untersuchungsergebnisse zeigen, daß die antistatische Wirkung der Hochdruckpolyethylenfolie durch das Vorhandensein der Polyvinylidenchlorid-Zwischenschicht über einen längeren Zeitraum (2 Monate) praktisch unverändert erhalten geblieben ist, und daß die elektrostatischen Aufladungen auf der in dieser erfindungsgemäßen Schutzhülle aufbewahrten Schallplatte im wesentlichen besei-

# 0 075 301

tigt waren. Beim Abspielen der Schallplatte wurde keine Beeinträchtigung der Wiedergabequalität durch elektrostatische Entladungen festgestellt. Die Wiedergabequalität wurde vielmehr von einschlägigen Fachleuten als hervorragend beurteilt.

## Patentansprüche

1. Schutzhülle für einen scheibenförmigen Ton- und/oder Videosignalaufzeichnungsträger mit einem dem Aufzeichnungsträger zugewandten, auf der Oberfläche des Aufzeichnungsträgers dicht und gleichmäßig anliegenden, elektrisch leitenden Innenteil aus Hochdruckpolyethylen- oder Polypropylenfolie mit eingearbeitetem Antistatikum, das in einer ausreichenden Menge an die Folienoberfläche austritt, und einem Außenteil aus einer den Innenteil umgebenden Papierfolie, dadurch gekennzeichnet, daß zwischen Innen- und Außenteil eine Zwischenschicht vorgesehen ist, die aus einem den Übergang des Antistatikums aus der Hochdruckpolyethylen- oder Polypropylenfolie in die Papierfolie im wesentlichen verhindernden Material besteht.

2. Schutzhülle nach Anspruch 1, dadurch gekennzeichnet, daß die Zwischenschicht aus Polyvinylidenchlorid, Polyvinylidenfluorid oder einem Ionomeren besteht.

3. Schutzhülle nach den Ansprüchen 1 und 2, dadurch gekennzeichnet, daß die Zwischenschicht mit der Papierfolie und/oder mit der Hochdruckpolyethylen- oder Polypropylenfolie einen festen Verbund bildet.

4. Schutzhülle nach den Ansprüchen 1 bis 3, dadurch gekennzeichnet, daß die Zwischenschicht eine Schichtdicke von 15 bis 50 μm besitzt.

5. Schutzhülle nach den Ansprüchen 1 bis 4, dadurch gekennzeichnet, daß die Hochdruckpolyethylen- oder Polypropylenfolie als eingearbeitetes Antistatikum Fettsäureglyceride mit wenigstens 50 Gew.-% gesättigten linearen $C_6$- bis $C_{12}$-Fettsäuremonoglyceriden enthält.

## Claims

1. Protective envelope for a sound and/or video signal recording support in the form of a disc, having an electrically conducting inner part turned towards the recording support and lying close to and uniform on the surface of the recording support, made of high pressure polyethylene or polypropylene foil with an antistatic substance incorporated which apperars on the foil surface in a sufficient quantity, and an outer part made of a paper sheet enclosing the inner part, characterized in that between the inner part and the outer part there is provided an intermediate layer consisting of a material which effectively prevents the migration of the antistatic substance from the high pressure polyethylene or polypropylene foil to the paper sheet.

2. Protective envelope according to Claim 1, characterized in that the intermediate layer consists of polyvinylidene chloride, polyvinylidene fluoride or an ionomer.

3. Protective envelope according to Claims 1 and 2, characterized in that the intermediate layer forms a firm combination with the paper sheet and/or with the high pressure polyethylene or polypropylene foil.

4. Protective envelope according to Claims 1 to 3, characterized in that the intermediate layer has a thickness of from 15 to 50 μm.

5. Protective envelope according to Claims 1 to 4, characterized in that the high pressure polyethylene or polypropylene foil contains as incorporated antistatic substance a fatty-acid glyceride with at least 50% by weight of saturated $C_6$ to $C_{12}$ fatty-acid monoglycerides.

8

**0 075 301**

**Revendications**

1. Enveloppe de protection pour un support d'enregistrement de signaux audio et(ou) vidéo en forme de disque, constituée d'une partie intérieure, tournée du côté du support d'enregistrement et s'appliquant étroitement et uniformément sur la surface de celui-ci, en une feuille en polyéthylène haute pression ou en polypropylène conductrice de l'électricité, dans laquelle est incorporé un agent à action antistatique, qui est libéré avec un débit suffisant à la surface de la feuille, et d'une partie extérieure formée d'une feuille de papier entourant la partie intérieure, caractérisée en ce que, entre la partie intérieure et la partie extérieure, est prévue une couche intercalaire formée d'une matière capable d'inhiber dans une large mesure le passage de l'agent antistatique de la feuille en polyéthylène haute pression ou en polypropylène dans la feuille de papier.

2. Enveloppe de protection suivant la revendication 1, caractérisée en ce que la couche intercalaire est réalisée en poly(chlorure de vinylidène), en poly(fluorure de vinylidène) ou en un ionomère.

3. Enveloppe de protection suivant les revendications 1 et 2, caractérisée en ce que la couche intercalaire forme un composite stratifié avec la feuille de papier et(ou) la feuille en polyéthylène haute pression ou en polypropylène.

4. Enveloppe de protection suivant les revendications 1 à 3, caractérisée en ce que la couche intercalaire possède une épaisseur de 15 à 50 $\mu$m.

5. Enveloppe de protection suivant les revendications 1 à 4, caractérisée en ce que l'agent à action antistatique, incorporé à la feuille en polyéthylène haute pression ou en polypropylène, est choisi parmi les glycérides d'acides gras, dont 50% en poids au moins sont des monoglycérides d'acides gras linéaires saturés en $C_6$ à $C_{12}$.

9